# EUROPÄISCHE PATENTSCHRIFT

(11) **EP 0 834 409 B1**
(45) Veröffentlichungstag und Bekanntmachung des Hinweises auf die Patenterteilung: **06.11.2002**
(21) Anmeldenummer: 97116057.7
(22) Anmeldetag: 16.09.1997
(51) Int. Cl.: B60H 1/00

(54) **Deckenluftkanal**
Ceiling air channel
Conduit d'air de plafond

(30) Priorität: 04.10.1996 DE 19641062
(43) Veröffentlichungstag der Anmeldung: 08.04.1998
(73) Patentinhaber: HAPPICH Fahrzeug- und Industrieteile GmbH, 42285 Wuppertal (DE)
(72) Erfinder: Jäckel, Helmut, 42553 Velbert (DE); Acker, Rainer, 42855 Remscheid (DE)

(56) Entgegenhaltungen:
- EP-A- 0 596 234
- DE-A- 3 729 050
- DE-A- 3 805 448
- US-A- 2 220 587

## Beschreibung

Die Erfindung bezieht sich auf einen Deckenluftkanal, insbesondere für Großraumfahrzeuge, wie Omnibusse, mit einem Einbauelemente tragenden Luftkanalboden und einem Luftkanalgehäuse mit zwei Seitenwänden und einem Deckenteil.

US-A-2 220 587 zeigt einen Deckenluftkanal der gattungsgemäßen Art.

Die DE 44 14 245 A1 zeigt einen Deckenluftkanal, wobei hinsichtlich des Luftkanalbodens besondere sich in der Praxis bewährte Vorkehrungen getroffen wurden. Bei diesem bekannten Deckenluftkanal wurde aber mit Bezug auf das Luftkanalgehäuse keine Verbesserung offenbart, so daß für dieses die herkömmliche aus Aluminium-Strangpreßprofilen oder Blechzuschnitten zusammengesetzte Bauart beibehalten wurde.

Der vorliegenden Erfindung liegt daher die Aufgabe zugrunde, das Luftkanalgehäuse des Deckenluftkanals zu verbessern, wobei an eine Leichtbauweise ebenso gedacht ist, wie an eine rationelle, insbesondere auch kostengünstige Herstellbarkeit.

Zur Lösung dieser Aufgabe ist erfindungsgemäß vorgesehen, daß das Luftkanalgehäuse aus einer zumindest zweischichtigen Kunststoffplatte gebildet ist, von der eine erste Schicht eine Vielzahl von einseitig geschlossenen topfförmigen Ausstülpungen und eine zweite Schicht eine glatte Ausbildung aufweist und die Schichten so miteinander durch Kaschieren verbunden sind, daß die glatte Schicht auf den Böden der topfförmigen Ausstülpungen anliegt, wobei die Kunststoffplatte mit wenigstens zwei in Abstand nebeneinander angeordneten und parallel zueinander verlaufenden Sollknickstellen versehen und längs dieser Sollknickstellen zwecks Bildung des Luftkanalgehäuses mit zwei Seitenwänden und einem damit einstückig verbundenen Deckenteil abgeknickt ist.

Die zumindest zweischichtige Kunststoffplatte ist ein relativ leichtes und dennoch steifes Gebilde mit hoher Festigkeit. Die Kunststoffplatte kann insbesondere aus Niederdruck-Polyethylen und Polypropylen bestehen, so daß die Sollknickstellen sich problemlos im Thermoverfahren erzeugen lassen. Das Luftkanalgehäuse wird lediglich durch Abknicken der durch die Sollknickstellen unterteilten Kunststoffplattenbereiche gebildet, wobei sich eine einstückige Ausbildung ergibt. Die Sollknickstellen bilden Filmscharniere, wie sie in verschiedenen technischen Bereichen geläufig sind.

Eine besonders hohe Stabilität für die Wandungen des Luftkanalgehäuses kann dadurch erzielt werden, daß die Kunststoffplatte dreischichtig ausgebildet ist, wobei die erste Schicht die mittlere Schicht bildet, die eine Vielzahl von einseitig geschlossenen topfförmigen Ausstülpungen aufweist.

Gemäß einer besonders vorteilhaften Ausgestaltung der Erfindung kann vorgesehen sein, daß die Kunststoffplatte eine wesentlich größere Abmessung als für die Bildung des Deckenluftkanalgehäuses erforderlich und weitere Sollknickstellen aufweist, um durch weitere Abknickungen einen zusätzlichen Versorgungskanal zu bilden. Dabei kann gemäß einer noch weitergehenden Verbesserung auch vorgesehen sein, daß sich an den zusätzlichen Versorgungskanal über eine Abknickung ein Dachverkleidungselement anschließt.

Bei besonderen Anforderungen im Hinblick auf eine Wärme-, Kälte- und insbesondere Geräuschisolierung, läßt sich die Erfindung weiterhin dadurch ausgestalten, daß die Außenflächen des Luftkanalgehäuses mit einer Isoliermaterialbeschichtung versehen sind.

Eine weitere besonders zweckmäßige Maßnahme besteht darin, daß die dem Luftkanalgehäuse gegenüberliegende Seitenwand des zusätzlichen Versorgungskanals die Abschlußwand eines Gepäckablagefachs bildet und an der dem Gepäckablagefach zugewandten Seite, ebenso wie die dem Fahrzeuginnern zugewandte Seite des ggf. vorgesehenen Deckenverkleidungselements eine Dekormaterialkaschierung aufweist.

Ferner ist es zweckmäßig, daß die dem Gepäckablagefach benachbarte Seitenwand des zusätzlichen Versorgungskanals mit Luftaustrittsöffnungen ausgebildet ist.

Die besonderen Vorteile der Erfindung und deren Ausgestaltungen sind darin zu sehen, daß das Luftkanalgehäuse zu einer vormontierten, biegesteifen und leichten Baueinheit zusammengefaßt werden konnte, und zwar unter Beachtung des Grundsatzes einer rationellen Fertigung.

Ein Ausführungsbeispiel der Erfindung wird im folgenden anhand der Zeichnungen näher erläutert, und es zeigen:
- Fig. 1: eine Kunststoffplatte für ein Luftkanalgehäuse und
- Fig. 2: ein Luftkanalgehäuse im montierten Zustand.

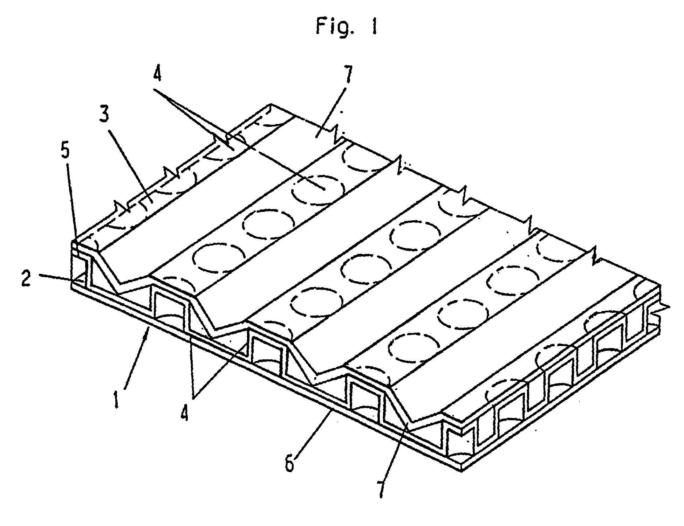

Fig. 1 zeigt in schaubildlicher Ansicht eine Kunststoffplatte 1, die zumindest einen zweischichtigen Aufbau mit einer ersten Schicht 2 und einer zweiten Schicht 3 besitzen kann, bei der dargestellten Ausführungsform besitzt die Kunststoffplatte 1 einen dreischichtigen Aufbau. Die erste Schicht 2 weist eine Vielzahl von einseitig geschlossenen topfförmigen Ausstülpungen 4 auf, während die zweite Schicht 3 glatt ausgeführt ist. Die zweite glatte Schicht 3 ist auf den Böden 5 der Ausstülpungen 4 angeordnet. Bei der bevorzugten Ausführungsform weist die Kunststoffplatte 1, wie dargestellt, eine dritte Schicht 6 auf, die an der Unterseite der ersten Schicht 2 angebracht ist. Die Schichten 2 und 3 und ggf. 6 besitzen lediglich Folienstärke und werden im noch heißen weichen Zustand zusammengebracht und miteinander zur Kunststoffplatte 1 verbunden. Die Kunststoffplatte 1 ist ein leichtes Bauteil mit einer relativ geringen Dicke von in der Regel drei oder fünf mm und ist dennoch sehr formstabil.

In der Kunststoffplatte 1 sind mindestens zwei Sollknickstellen 7 nach Art von Filmscharnieren ausgebildet, die für die Bildung des Deckenluftkanals wesentlich sind. Die Sollknickstellen 7 sind mit einem vorbestimmten Abstand nebeneinander angeordnet und verlaufen parallel zueinander. Die Sollknickstellen 7 können mittels Wärme und Druck z. B. mit einer heißen Prägerolle oder mit einer heißen Prägeleiste in die Kunststoffplatte 1 eingebracht sein. Denkbar ist auch eine partielle Erwärmung der Kunststoffplatte 1 und das Einbringen der Sollknickstellen 7 mit einem kalten Werkzeug.

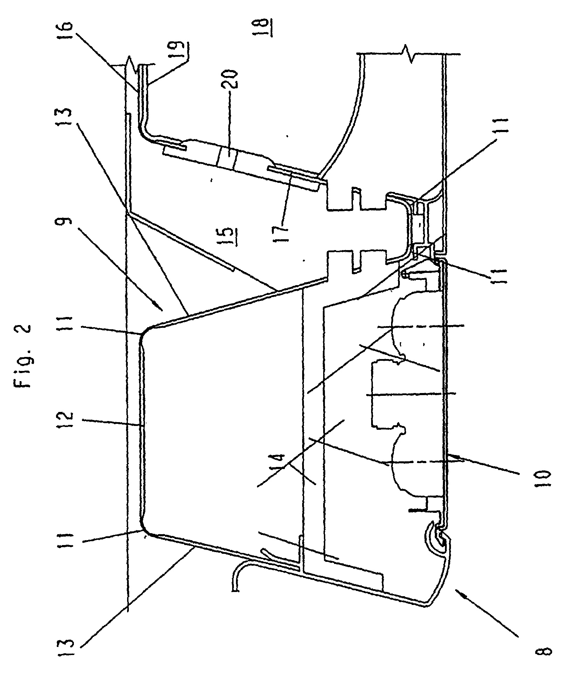

In Fig. 2 ist die Anordnung eines Deckenluftkanals an einem Dach- und Seitenwandbereich im Innern eines Omnibusses 8 gezeigt. Der Deckenluftkanal besteht aus einem Luftkanalgehäuse 9, dessen untere Öffnung durch einen Luftkanalboden 10 vorbekannter Art verschlossen ist. Das Luftkanalgehäuse 9 ist aus der Kunststoffplatte 1 nach Fig. 1 gebildet, und zwar dadurch, daß Abknickungen 11 längs der Sollknickstellen 7 vorgenommen worden sind. Aus der ursprünglich ebenen Kunststoffplatte 1 ist dadurch ein Luftkanalgehäuse 9 mit einer Luftkanaldecke 12 und damit einstückig verbundenen Luftkanalwänden 13 entstanden, das mittels herkömmlicher Halterungen 14 im Businnern fensternah befestigt ist.

Im Ausführungsbeispiel nach Fig. 2 schließt sich an das Luftkanalgehäuse 9 über weitere Abknickungen 11 ein zusätzlicher Versorgungskanal 15 an. Hierfür ist es lediglich erforderlich, die Kunststoffplatte 1 mit einer größeren Abmessung als für die Bildung des Luftkanalgehäuses 9 erforderlich auszubilden und in der Kunststoffplatte 1 entsprechend mehr Sollknickstellen 7 vorzusehen. Fig. 2 zeigt aber auch eine noch weitergehende Möglichkeit auf, indem sich an dem zusätzlichen Versorgungskanal 15 über eine weitere Abknickung 11 ein Dachverkleidungselement 16 anschließt.

Obgleich die Kunststoffplatte 1 von Hause aus, insbesondere dann, wenn sie dreischichtig ausgeführt ist, gute Wärme-, Kälte- und Geschräuschisoliereigenschaften aufweist, besteht die Möglichkeit zumindest die Außenseiten der Luftkanaldecke 12 und der Luftkanalwände 13 mit einer nicht näher dargestellten Auflage aus Isoliermaterial zu versehen. Es ist auch möglich, daß sich diese Auflage über den Versorgungskanal 15 und über das Dachverkleidungselement 16 fortsetzt.

Fig. 2 zeigt weiter, daß die dem Luftkanalgehäuse 9 abgewandte äußere Seitenwand 17 des Versorgungskanals 15 die Abschlußwand eines Gepäckablagefachs 18 bildet. Diese Abschlußwand ist nun, ebenso wie die dem Businnern zugewandte Seite des Dachverkleidungselements 16 mit einem Dekormaterial 19 kaschiert.

Der zusätzliche Versorgungskanal 15 kann als Luftkanal dienen und für eine Permanentbelüftung des Omnibusses vorgesehen sein. Zu diesem Zweck befinden sich in der Seitenwand 17 nach Art einer Lochreihe angeordnete Luftaustrittsöffnungen 20.

Das neue Luftkanalgehäuse kann sich durchlaufend über die gesamte Fahrzeuglänge erstrecken ggf. aber auch in Längenabschnitte unterteilt sein. Gleiches gilt auch dann, wenn das Luftkanalgehäuse mit einem Versorgungskanal 15 und ggf. einem Dachverkleidungselement 16 einstückig ausgebildet ist.

## Patentansprüche

1. Deckenluftkanal, insbesondere für Großraumfahrzeuge wie Omnibusse, mit einem Einbauelemente tragenden Luftkanalboden (10) und einem Luftkanalgehäuse (9) mit zwei Seitenwänden (13) und einem Deckenteil (12), **dadurch gekennzeichnet, daß** das Luftkanalgehäuse (9) aus einer zumindest zweischichtigen Kunststoffplatte (1) gebildet ist, von der eine erste Schicht (2) eine Vielzahl von einseitig geschlossenen topfförmigen Ausstülpungen (4) und eine zweite Schicht (3) eine glatte Ausbildung aufweist und die Schichten (2, 3) so miteinander durch Kaschieren verbunden sind, daß die glatte Schicht (3) auf den Böden (5) der topfförmigen Ausstülpungen (4) anliegt, wobei die Kunststoffplatte (1) mit wenigstens zwei in Abstand nebeneinander angeordneten und parallel zueinander verlaufenden Sollknickstellen (7) versehen und längs dieser Sollknickstellen (7) zwecks Bildung des Luftkanalgehäuses (9) mit zwei Seitenwänden (13) und einem damit einstückig verbundenen Deckenteil (12) abgeknickt ist.

2. Deckenluftkanal nach Anspruch 1, **dadurch gekennzeichnet, daß** die Kunststoffplatte (1) dreischichtig ausgebildet ist, wobei die erste Schicht (2) die mittlere Schicht bildet, die eine Vielzahl von einseitig geschlossenen topfförmigen Ausstülpungen (4) aufweist.

3. Deckenluftkanal nach Anspruch 1 oder 2, **dadurch gekennzeichnet, daß** die Kunststoffplatte (1) eine wesentlich größere Abmessung als für die Bildung des Luftkanalgehäuses (9) erforderlich und weitere Sollknickstellen (7) aufweist, um durch weitere Abknickungen (11) einen zusätzlichen Versorgungskanal (15) zu bilden.

4. Deckenluftkanal nach Anspruch 3, **dadurch gekennzeichnet, daß** sich an den zusätzlichen Versorgungskanal (15) über eine Abknickung (11) ein ebenfalls von der Kunststoffplatte (1) gebildetes Deckenverkleidungselement (16) anschließt.

5. Deckenluftkanal nach wenigstens einem der Ansprüche 1 bis 4, **dadurch gekennzeichnet, daß** die Außenflächen des Lunftkanalgehäuses (9) mit einer Isoliermaterialbeschichtung versehen sind.

6. Deckenluftkanal nach einem der Ansprüche 3, 4 oder 5 in Verbindung mit Anspruch 3 oder 4, **dadurch gekennzeichnet, daß** die dem Luftkanalgehäuse (9) gegenüberliegende Seitenwand (17) des zusätzlichen Versorgungskanals (15) die Abschlußwand eines Gepäckablagefachs (18) bildet und an der dem Gepäckablagefach (18) zugewandten Seite, ebenso wie die dem Fahrzeuginnern zugewandte Seite des ggf. vorgesehenen Deckenverkleidungselements (16) eine Dekormaterialkaschierung (19) aufweist.

7. Deckenluftkanal nach Anspruch 6, **dadurch gekennzeichnet, daß** die dem Gepäckablagefach (18) benachbarte Seitenwand (17) des zusätzlichen Versorgungskanals (15) mit Luftaustrittsöffnungen (20) ausgebildet ist.

## Claims

1. Ceiling air channel, in particular for high-capacity vehicles such as buses, having an air-channel base (10), which bears installation elements, and an air-channel housing (9) with two side walls (13) and a ceiling part (12), **characterized in that** the air-channel housing (9) is formed from an at least two-layered plastic panel (1), of which a first layer (2) has a multiplicity of cup-like protuberances (4) which are closed on one side and a second layer (3) has a smooth formation, and the layers (2, 3) are laminated to one another such that the smooth layer (3) butts against the bases (5) of the cup-like protuberances (4), the plastic panel (1) being provided with at least two predetermined locations of inflection (7), which are spaced apart alongside one another and run parallel to one another, and being inflected along these predetermined locations of inflection (7) for the purpose of forming the air-channel housing (9) with two side walls (13) and a ceiling part (12) connected integrally thereto.

2. Ceiling air channel according to Claim 1, **characterized in that** the plastic panel (1) is of three-layered design, the first layer (2) forming the central layer, which has a multiplicity of cup-like protuberances (4) which are closed on one side.

3. Ceiling air channel according to Claim 1 or 2, **characterized in that** the plastic panel (1) is of considerably greater dimensions than are necessary for forming the air-channel housing (9), and has further predetermined locations of inflection (7) in order to form an additional supply channel (15) by means of further inflections (11).

4. Ceiling air channel according to Claim 3, **characterized in that** the additional supply channel (15) is adjoined, via an inflection (11), by a ceiling-cladding element (16) which is likewise formed by the plastic panel (1).

5. Ceiling air channel according to at least one of Claims 1 to 4, **characterized in that** the outer surfaces of the air-channel housing (9) are provided with an insulating-material coating.

6. Ceiling air channel according to one of Claims 3, 4 or 5, in conjunction with Claim 3 or 4, **characterized in that** the side wall (17) of the additional supply channel (15), said side wall being located opposite the air-channel housing (9), forms the termination wall of a luggage-storage compartment (18) and has a decorative-material lamination (19) on the side which is directed towards the luggage-storage compartment (18), as does that side of the possibly provided ceiling-cladding element (16) which is directed towards the vehicle interior.

7. Ceiling air channel according to Claim 6, **characterized in that** the side wall (17) of the additional supply channel (15), said side wall being adjacent to the luggage-storage compartment (18), is designed with air-outlet openings (20).

## Revendications

1. Conduit d'air de plafond, notamment pour gros véhicules tels que des omnibus, comprenant un fond de conduit d'air (10) portant des éléments encastrés, et un boîtier de conduit d'air (9) avec deux parois latérales (13) et une partie de plafond (12), **caractérisé en ce que** le boîtier de conduit d'air (9) est formé à partir d'une plaque en plastique (1) comprenant au moins deux couches, dont une première couche (2) présente une pluralité de protubérances en forme de pots (4) fermées d'un côté et une deuxième couche (3) présente une configuration lisse, et les couches (2, 3) étant connectées l'une à l'autre par contre-collage de telle sorte que la couche lisse (3) prenne appui sur les fonds (5) des protubérances en forme de pots (4), la plaque en plastique (1) étant pourvue d'au moins deux zones de pliure (7) disposées l'une à côté de l'autre suivant un certain intervalle et s'étendant parallèlement l'une à l'autre, et étant pliée le long de ces zones de pliure (7) dans le but de former le boîtier de conduit d'air (9) avec deux parois latérales (13) et une partie de plafond (12) connectée d'une pièce à celles-ci.

2. Conduit d'air de plafond selon la revendication 1, **caractérisé en ce que** la plaque en plastique (1) est réalisée en trois couches, la première couche (2) formant la couche intermédiaire, qui présente une pluralité de protubérances en forme de pots (4) fermées d'un côté.

3. Conduit d'air de plafond selon la revendication 1 ou 2, **caractérisé en ce que** la plaque en plastique (1) présente une dimension relativement plus grande que nécessaire pour la formation du boîtier de conduit d'air (9) et d'autres zones de pliure (7), afin de former un conduit d'alimentation supplémentaire (15) par des pliures supplémentaires (11).

4. Conduit d'air de plafond selon la revendication 3, **caractérisé en ce qu'**un élément d'habillage de plafond (16) formé également par la plaque en plastique (1) se raccorde au conduit d'alimentation supplémentaire (15) par le biais d'une pliure (11).

5. Conduit d'air de plafond selon au moins l'une des revendications 1 à 4, **caractérisé en ce que** les faces extérieures du boîtier de conduit d'air (9) sont pourvues d'un revêtement de matériau isolant.

6. Conduit d'air de plafond selon l'une quelconque des revendications 3, 4, ou 5 conjointement avec la revendication 3 ou 4, **caractérisé en ce que** la paroi latérale (17) du conduit d'alimentation supplémentaire (15), opposée au boîtier de conduit d'air (9), forme la paroi de fermeture d'un compartiment à bagages (18) et présente, du côté tourné vers le compartiment à bagages (18), comme du côté de l'élément d'habillage du plafond (16) éventuellement prévu tourné vers l'intérieur du véhicule, un contre-collage de matériau décoratif (19).

7. Conduit d'air de plafond selon la revendication 6, **caractérisé en ce que** la paroi latérale (17) du conduit d'alimentation supplémentaire (15) voisine du compartiment à bagages (18) est réalisée avec des ouvertures de sortie d'air (20).
